# EUROPÄISCHE PATENTSCHRIFT

(11) **EP 3 457 628 B1**
(45) Veröffentlichungstag und Bekanntmachung des Hinweises auf die Patenterteilung: **10.11.2021**
(21) Anmeldenummer: 18000735.3
(22) Anmeldetag: 14.09.2018
(51) Int. Cl.: H04L 9/32, G06F 21/30, H04L 29/06, H04W 12/06, H04L 9/08

(54) **AUTHENTIFIZIERUNG VON DATENQUELLEN ÜBER EINE UNI-DIREKTIONALE KOMMUNIKATIONSVERBINDUNG**
AUTHENTICATION OF DATA SOURCES OVER A UNIDIRECTIONAL, COMMUNICATION LINK
AUTHENTIFICATION DES SOURCES DE DONNÉES À L'AIDE D'UNE CONNEXION DE COMMUNICATION UNI-DIRECTIONNELLE

(30) Priorität: 18.09.2017 DE 102017008740
(43) Veröffentlichungstag der Anmeldung: 20.03.2019
(73) Patentinhaber: Giesecke+Devrient Mobile Security GmbH, 81677 München (DE)
(72) Erfinder: Eichholz, Jan, 80997 München (DE); Schwartz, Udo, 81541 München (DE); Stadler, Kurt, 82041 Oberhaching (DE)
(74) Vertreter: Giesecke + Devrient IP

(56) Entgegenhaltungen:
- EP-A1- 2 697 786
- WO-A1-2011/131359
- US-A1- 2014 282 974
- DOMINIKUS S ET AL: "mCoupons: An Application for Near Field Communication (NFC)", ADVANCED INFORMATION NETWORKING AND APPLICATIONS WORKSHOPS, 2007, AINAW '07. 21ST INTERNATIONAL CONFERENCE ON, IEEE, PISCATAWAY, NJ, USA, 21. Mai 2007 (2007-05-21), Seiten 421-428, XP031334719, ISBN: 978-0-7695-2847-2

## Beschreibung

### Gebiet der Erfindung

Die Erfindung betrifft das Gebiet der Validierung von Daten, die von einem Device (D) an ein Prüfgerät (P) gesendet werden. Die Daten sollen an das Device gebunden sein.

Die Datenquelle kann ein nicht vertrauenswürdiges Device D sein. Konkret soll das Prüfgerät feststellen ob
- Die Daten wirklich von dem angegebenen Gerät kommen
- Die Daten unverändert und nicht modifiziert sind.

Insbesondere soll das Verfahren erkennen können, wenn Daten, die an eine bestimmte Datenquelle gebunden sind, von einem Device zu einem anderen kopiert wurden.

Ein beispielhafter Anwendungsfall wäre die Prüfung von Fahrkarten des Öffentlichen (Personen-)(Nah-)Verkehrs, die auf personalisierten Devices gespeichert sind. Die Daten sind in diesem Fall Fahrkarten, die an ein Device gebunden sind und die nicht auf einem anderen Gerät verwendbar sein sollen (dies würde ja einer Mehrfachnutzung von Fahrkarten entsprechen).

### Stand der Technik

In dem Stand der Technik entsprechenden Systemen wird die Authentifizierung der Datenquelle durch ein Challenge-Response Verfahren durchgeführt. Dabei gilt das Prüf-Gerät P als vertrauenswürdig; das Device D ist aus der Sicht des Prüfgeräts zunächst nicht vertrauenswürdig. Nach diesem Verfahren gibt das prüfende Gerät P einen Wert (den "Challenge") vor, aus dem das zu prüfende Device eine Antwort generiert. In die Generierung der Antwort geht ein Schlüssel ein, der nur auf dem Device existiert; in einer möglichen Ausführungsform wird die Antwort mit einem privaten Schlüssel signiert, der nur auf diesem konkreten Device vorhanden ist. Mit dem zugehörigen öffentlichen Schlüssel kann das Prüf-Gerät den Ursprung der Nachricht überprüfen.

Beispielsweise wird in Druckschrift WO 2012/140308 A1 ein Verfahren beschrieben, bei dem ein Device mit einem Ticketlesegerät über eine Near-Field-Communication (NFC)-Schnittstelle kommunizieren kann, wobei das Device einen Challenge von dem Ticketlesegerät erhält und mit einer Response auf den Challenge des Ticketlesegeräts antwortet.

Für die Sicherheit dieses Verfahrens muss der "Challenge" einige Anforderungen erfüllen:
- Er muss hinreichend komplex sein
- Er muss dem Prüf-Gerät und dem Device bekannt sein
- Er muss von einem vertrauenswürdigen Gerät erzeugt werden.
- Er darf sich nicht wiederholen
- Er darf für das zu-prüfende Device nicht vorhersehbar sein.

Dies bedeutet im Allgemeinen und nach dem Stand der Technik, dass der "Challenge" vom Prüfgerät P erzeugt und an das zu prüfende Gerät übertragen werden muss. Daher sind für die Authentifizierung ein bidirektionaler Kommunikationskanal und ein Protokoll nach dem Request/Response Paradigma erforderlich.

Ferner wird in DOMINIKUSS ET AL: "mCoupons: An Application for Near Field Communication (NFC)", ADVANCED INFORMATION NETWORKING AND APPLICATIONS WORKSHOPS, 2007, AINAW '07. 21ST INTERNATIONAL CONFERENCE ON, IEEE, PISCATAWAY, NJ, USA, 21. Mai 2007 (2007-05-21), Seiten 421-428, XP031334719, ISBN: 978-0-7695-2847-2 ein Verfahren beschrieben, bei dem ein sogenannter mCoupon aus einer Zeitung oder einem Plakat, die oder das mit einem passiven NFC Gerät ausgestattet ist, beispielsweise mit einem mobilen Endgerät heruntergeladen werden kann und anschließend an einer Kasse eingelöst werden kann.

### Aufgabe der Erfindung

Der Erfindung liegt die Aufgabe zu Grunde, ein Verfahren anzugeben, bei dem eine uni-direktionale Kommunikation von dem Device/ Gerät D zu dem Prüfgerät P ausreicht, um die Attestierung durchführen zu können.

Eine solche mögliche uni-direktionale Verbindung wäre z.B. ein Barcode, der von dem Prüfgerät gelesen wird.

Der Vorteil liegt in der Schnelligkeit und Geschwindigkeit des Prüfvorgangs. Es braucht keine Verbindung aufgebaut werden, es ist kein Protokoll erforderlich, und die Prüfung kann jederzeit ohne neuerlichen Trigger wiederholt werden. Ein weiterer Vorteil ist, dass die Mitwirkung des Devices bei der Authentifizierung minimal ist.

### Zusammenfassung der Erfindung

Die Aufgabe wird gelöst durch ein Verfahren gemäß dem unabhängigen Anspruch 1. Vorteilhafte Ausgestaltungen des Verfahrens sind in abhängigen Ansprüchen angegeben.

Gemäß der Erfindung wird eine Variante des Challenge/Response Verfahrens eingesetzt. Der Challenge wird dabei weder vom Prüfgerät P noch vom zu prüfenden Device D erzeugt, sondern von einer dritten Komponente, nämlich den Challenge-Geber, die ebenfalls vertrauenswürdig sein soll. Dadurch, dass das Device den Challenge nicht vom Prüfgerät bezieht sondern von einem externen Challenge-Geber, ist zwischen dem Device, das den zu prüfenden Datensatz (z.B. Fahrschein) enthält, und dem Prüfgerät keine bidirektionale Datenverbindung erforderlich. Es ist nicht zwingend erforderlich, dass das Prüfgerät an das Device eine Aufforderung sendet, den zu prüfenden Datensatz bereitzustellen, sondern das Device kann den Datensatz ohne Aufforderung seitens des Prüfgeräts über eine uni-direktionale Kommunikationsverbindung an das Prüfgerät bereitstellen. Hierdurch wird der wesentliche Fortschritt dieses Verfahrens erreicht, dass das Prüfgerät basierend auf einer einzigen über eine uni-direktionale übertragenen Nachricht, gesendet vom zu prüfenden Device an das prüfende Prüfgerät, eine Authentifizierung der Datenquelle und eine Integritätsprüfung der Nachricht vornehmen kann. Hierdurch ist der Prüfvorgang gegenüber einem herkömmlichen bilateralen Challenge-Response-Verfahren zwischen Device und Prüfgerät beschleunigt. Besonders im Ticketing-Bereich, wenn der Datensatz ein elektronischer Fahrschein ist, und der Prüfvorgang eine Fahrscheinkontrolle bedeutet die Beschleunigung erhöhten Komfort für die Fahrgäste und das Kontrollpersonal.

Die Komponente des Challenge-Geber stellt vorzugsweise einen Dienst bereit, der in regelmäßigen Abständen neue Werte als "Challenge" generiert. Dieser Wert wird sowohl an das Prüfgerät als auch an das zu prüfende Device übertragen. Dazu kann sowohl ein Push-Verfahren als auch ein Request/Response Verfahren eingesetzt werden. Im letzteren Fall soll sowohl das Prüfgerät als auch das Device D so gestaltet sein, dass gesteuert durch einen Trigger der Dienst des Challenge-Geber abgefragt und ein neuer Challenge geladen wird. Die Übertragung des "Challenge" erfolgt asynchron und unabhängig von dem Prüfvorgang. Für eine erfolgreiche Prüfung muss der Challenge geladen sein bevor der Prüfvorgang stattfindet. Der Challenge ist nur einen begrenzten Zeitraum gültig.

Im Ticketing Bereich ist es z.B. denkbar, dass die Challenge durch einen NFC-Check-in des Nutzers mit dem Device beim Betreten des Beförderungsmittels an das Device übertragen wird.

Der Trigger ist ganz allgemein ein registrierbares Ereignis auf dem Device; das Verfahren soll insbesondere folgende Trigger-Möglichkeiten umfassen:
- eine Zustandsänderung auf dem Device
- ein Ereignis basierend auf Zeit (periodisches Signal)
- ein Hardware Signal, insbesondere eine Unterbrechung (Interrupt)
- ein programmgesteuertes oder durch Software generiertes Ereignis.

Für das Prüfgerät kann alternativ auch eine mit dem Challenge-Geber vereinbarte und abgestimmte Berechnungsvorschrift für die Challenge-Werte verwendet werden; in dieser Variante kann die Übertragung des Challenge an das Prüfgerät entfallen, weil sowohl der Challenge-Geber C als auch das Prüfgerät als vertrauenswürdige Komponenten gelten. Diese Ableitung darf nur für den Challenge-Geber und dem Prüfgerät möglich sein (z.B. durch die Verwendung von Geheimnissen, die nur C und P bekannt sind).

Die Komponente C soll den "Challenge" periodisch ändern. Der Challenge muss für das nicht-vertrauenswürdige Device/End-Gerät D und potentiellen Angreifern immer unvorhersehbar sein. Nach jedem Wechsel muss der "Challenge" erneut an das Prüfgerät und das Device D übertragen werden bzw. neu berechnet werden.

Eine beispielhafte, mögliche Ausführung aus dem Bereich öffentlicher Verkehr wäre wie folgt:
Im Bereich des Transportmittels des öffentlichen Nahverkehrs (Bus, Bahn) (ÖPNV = Öffentlicher Personen-Nahverkehr) wird ein Challenge-Geber-Server installiert, der über ein (ungesichertes) Funknetz (z.B. WLAN) erreichbar ist. Das Device des Fahrgasts verbindet sich mit dem Server, wenn der Fahrgast in den Bereich des Funknetzes kommt (Trigger-Ereignis). Das Device des Fahrgasts erhält von dem Server C den "Challenge". Auf gleiche Weise erhält das Prüfgerät des Kontrolleurs den "Challenge", wenn das Prüfgerät in den Bereich des Challenge-Gebers eintritt. Es sind auch andere Verteilungsmöglichkeiten der Challenges denkbar, wie: BLE, Dynamischer Barcode im Wageninneren, Service im Internet, Infrarot, NFC (Check-in-Check-out-System), "Flackercode"...

Der Datensatz, beispielsweise Fahrschein, wird vorzugsweise in Form einer Signatur vom Device an das Prüfgerät übertragen. Die Signatur ist mit einem Device-spezifischen individuellen privaten Schlüssel erzeugt, der im Device sicher abgespeichert ist. Hierdurch ist der Datensatz (Fahrschein) an das Device gebunden und nicht übertragbar oder missbräuchlich vervielfältigbar. Das Prüfgerät verfügt über den entsprechenden öffentlichen Schlüssel zur Verifizierung der Signatur. Der öffentliche Schlüssel des Device liegt beispielsweise in einem Zertifikat im Prüfgerät vor. Der öffentliche Schlüssel des Device bzw. das Zertifikat ist im Prüfgerät abgespeichert oder wird erst, wenn er/es benötigt wird, aus einer Datenbank abgerufen, beispielsweise vom selben Server, auf dem auch der Challenge-Geber implementiert ist. Wahlweise wird der öffentliche Schlüssel des Device bzw. das Zertifikat zusammen mit dem der Challenge abgerufen, in einem einzigen Kommunikationsvorgang. Beim eigentlichen Prüfvorgang erzeugt das nicht-vertrauenswürdige Device des Fahrgasts mit dem Device-individuellen privaten Schlüssel eine Signatur über den Datensatz (Fahrkarte) und den Challenge. Da das Prüfgerät den "Challenge" kennt und über den zum privaten Schlüssel gehörigen entsprechenden öffentlichen Schlüssel verfügt, kann das Prüfgerät die Signatur nachrechnen und die Gültigkeit sowie die Datenquelle sicher feststellen.

Nach diesem Verfahren verwenden die Devices im gleichen Bereich den gleichen "Challenge". Dies stellt jedoch kein Problem dar, da die Signaturen in den Responses der unterschiedlichen Devices durch die unterschiedlichen privaten Schlüssel der Devices alle verschieden sind, und die Lebenszeit des Challenge so gewählt ist, dass innerhalb dieser Zeit keine Voraus-Berechnung erfolgen kann. Damit wird eine aufgezeichnete Antwort als ungültig erkannt, da der Challenge zu diesem Zeitpunkt ungültig ist.

Als mögliche Variante kann bei der Generierung der Antwort durch das zu prüfende Device D zusätzlich zum Challenge auch noch ein Zeitstempel verwendet werden. Dies setzt eine Zeitsynchronisation zwischen dem Prüfgerät und dem Device D voraus.

### Kurzbeschreibung der Figuren

Ausführungsbeispiele werden anhand der Figuren dargelegt, worin zeigen:
Fig. 1 zeigt ein Systembild mit den beteiligten Komponenten (Challenge Geber C, Device D und dem Prüfgerät P). Zusätzlich sind in diesem Bild die wesentlichen Informationsflüsse, wie sie bei der Authentifizierung erfolgen, dargestellt.
Fig. 2 zeigt die Schnittstellen und die auf den jeweiligen Komponenten erforderlichen Daten.
Fig. 3 stellt den dynamischen Ablauf einer Device Authentifizierung mit den zwischen den Komponenten übertragenen Nachrichten dar.
Fig. 4 zeigt den Aufbau und die Elemente der Antwort, die vom Prüfgerät P gelesen bzw. empfangen wird, wenn der Prüfvorgang erfolgt.

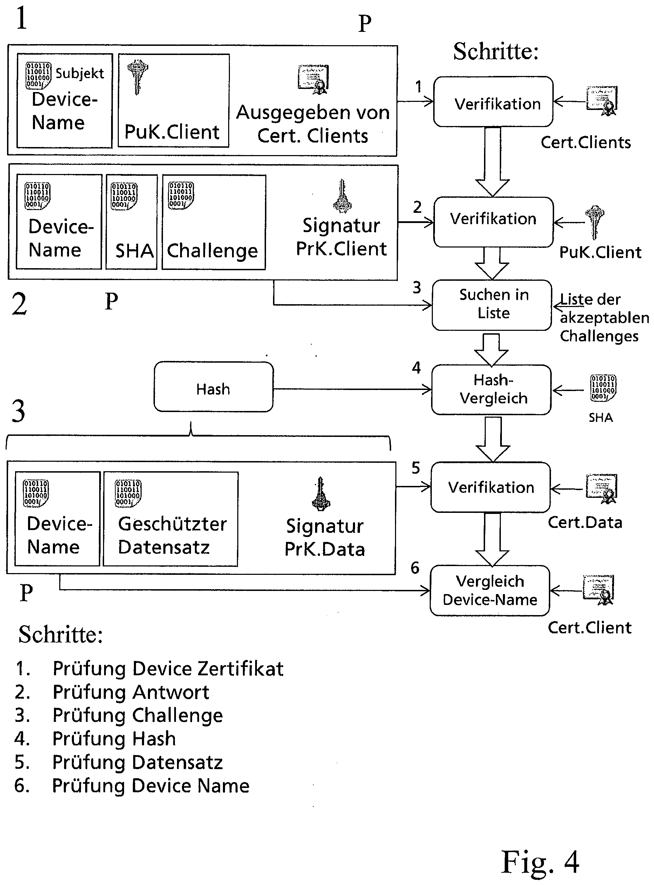

Fig. 4 beschreibt weiter die Prüfung der Antwort auf dem Prüfgerät, und zeigt wie das Prüfgerät die Authentifizierung des Devices vornehmen kann.

### Detaillierte Beschreibung

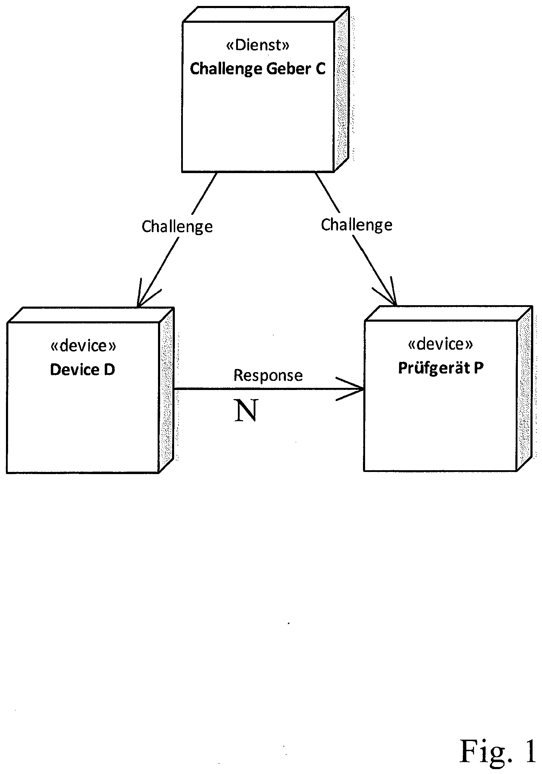

Die in Fig. 1 schematisch dargestellte Erfindung beschreibt ein Verfahren, mit dem ein Prüfgerät P die Quelle einer Nachricht N authentifizieren kann. In einer besonderen Anwendung des Verfahrens kann durch das Prüfgerät P festgestellt werden, ob das Device D einen gültigen Datensatz besitzt, wenn dieser Datensatz an das betreffende Device D gebunden ist, und zwar unabhängig davon ob der Datensatz selbst übertragen wird oder nicht.

Der Datensatz hat beispielsweise die Funktion eines aktivierten elektronischen Fahrscheins, der im Device D gespeichert ist und der den Inhaber des Fahrscheins/ des Device D zur Nutzung eines (öffentlichen) Verkehrsmittels berechtigt. Das Prüfgerät P wird beispielsweise durch eine Prüfperson mitgeführt und ist dazu eingerichtet, den Fahrschein während der Nutzung des öffentlichen Verkehrsmittels zu überprüfen, um die Berechtigung des Inhabers zur Nutzung des öffentlichen Verkehrsmittels zu verifizieren.

Das Verfahren benötigt für diese Prüfung eine einzige Nachricht N, die über eine uni-direktionale Kommunikationsverbindung vom zu prüfenden Device D an das prüfende Prüfgerät P übertragen wird. Die einzige erforderliche Mitwirkung des zu prüfenden Devices D ist, diese Nachricht N in einer geeigneten Form für das Prüfgerät P verfügbar zu machen.

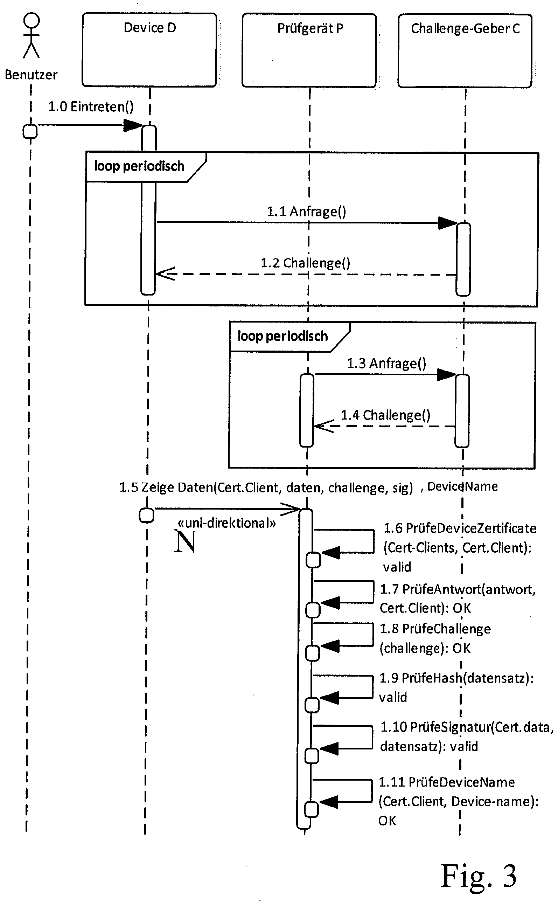

Die vom zu prüfenden Device D gesendete oder bereitgestellte Nachricht N beinhaltet, wie in Fig. 3, Schritt 1.5 gezeigt ist, im Wesentlichen eine Signatur sig (= Signatur Prk.Client). In die Berechnung der Signatur sig (= Signatur Prk.Client) geht neben dem Datensatz ein "Challenge" ein, der sowohl dem prüfenden als dem zu prüfenden Gerät P bzw. D bekannt sein muss. Der Challenge gilt nicht als Geheimnis, er kann in der Nachricht N selbst enthalten sein. Die Signatur sig wird mit dem privaten Schlüssel PrK.Client des zu prüfenden Gerät/Device D berechnet, der nur auf dem zu prüfenden Gerät / Device D bekannt ist.

In einer weiteren Ausführungsvariante können in die Signatur sig auch noch weitere Daten eingehen, insbesondere kann auch ein Zeitstempel einbezogen werden.

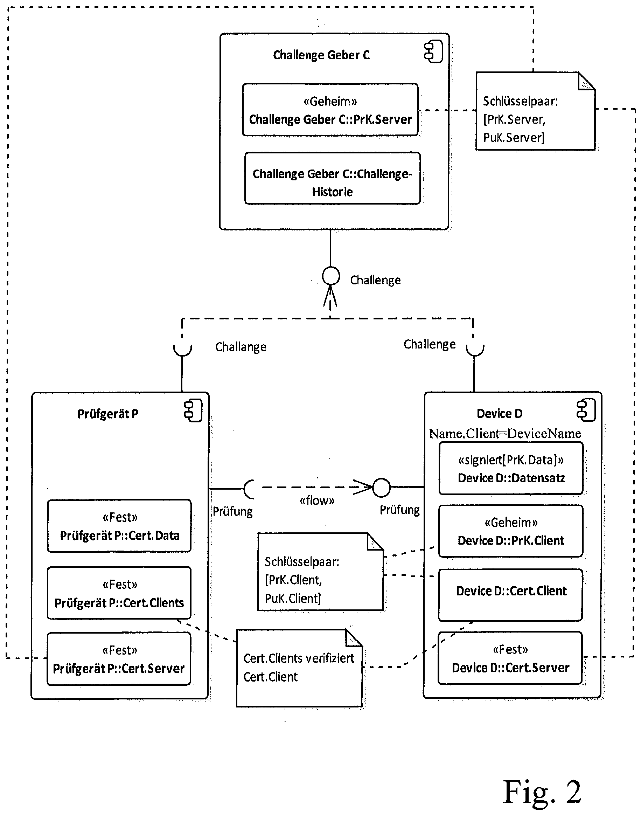

Der zu dem privaten Device Schlüssel PrK.Client zugehörige öffentliche Schlüssel PuK.Client ist dem Prüfgerät P bekannt; das Prüfgerät P kennt auch eine vertrauenswürdige Zuordnung des öffentlichen Schlüssels PuK.Client zu dem Device D (im allgemeinen wird dies durch ein Zertifikat Cert.Client hergestellt, das im Device D gespeichert ist und durch das Prüfgerät P mit einem Zertifikat Cert.Clients verifizierbar ist, vergleiche Fig. 2). Neben der Signatur sig kann die Nachricht N gemäß Fig. 3, Schritt 1.5 auch weitere Elemente enthalten, die für die Verarbeitung wichtig sind bzw. den Prüfungsvorgang vereinfachen, insbesondere:
- Den geschützten Datensatz ("daten") selbst (sofern er nicht vertraulich ist)
- Das Device Zertifikat Cert.Client (bzw. eine Zertifikatskette, falls in die Zertifikatserstellung und Zertifikatsprüfung mehrere hierarchisch geordnete Instanzen involviert sind)
- Den Challenge oder eine Referenz auf den Challenge, der es dem Prüfgerät erlaubt, den verwendeten Challenge Wert zu ermitteln
- Den Device Namen Device-Name

Der wesentliche Unterschied dieses Verfahrens im Gegensatz zum Stand der Technik ist, wie der Challenge verteilt wird, sodass das Prüfgerät P und das zu prüfende Gerät D einerseits einen gemeinsamen Challenge Wert besitzen und der Challenge für das zu prüfende Device D unvorhersehbar ist.

Im Übrigen ist für die Sicherheit des Verfahrens der Challenge maßgeblich. Ohne Challenge kann die Nachricht N einfach mehrfach von verschiedenen Devices D dem Prüfgerät P vorgespielt werden. Wenn der Challenge vorhersehbar ist, kann auf einem Device D eine entsprechende Menge mit den vorhersehbaren Challenge Werten erzeugt werden, die dann im Prüfvorgang auf verschiedenen Devices D dem Prüfgerät P zugespielt werden. Damit würde die Authentifizierung der Datenquelle unterlaufen.

Das Verfahren benötigt die folgenden Komponenten:

### Der Challenge-Geber C

Der Challenge-Geber C ist ein Dienst, der in dem Bereich verfügbar sein soll, in dem die Prüfung des Datensatzes (z.B. elektronischen Fahrscheins) erfolgen soll. Der Challenge-Geber C kann über jegliches Netz, vorzugsweise ein Funknetz, erreichbar sein. Mögliche Ausführungsformen sind ein WIFI Funknetz oder auch ein Ad-Hoc Netzwerk.

Wenn ein Device D in den Bereich des Challenge-Gebers kommt, baut die auf dem Device D ablaufende Applikation eine Verbindung zu dem Dienst / Challenge-Geber C auf. Das Device D sendet eine Anfrage und erhält von dem Dienst / Challenge-Geber C den aktuellen Challenge Wert.

Der Challenge-Geber C kann ein beliebiges geeignetes Verfahren verwenden, um Challenge Werte zu generieren; zum Beispiel kann der Challenge Geber C Werte durch einen Zufallszahlengenerator erzeugen. Das Verfahren umfasst auch andere Methoden, wie etwa Schlüsselableitungen oder Methoden, die auf Zeit- und/ oder Datumswerten oder geo-lokalen Daten basieren. Der Challenge-Geber C soll den Challenge-Wert periodisch ändern. Wie lange ein Challenge Gültigkeit haben soll, hängt von Art und Kritikalität des Geschäftsfalls ab.

In einer besonderen Ausführungsform kann der Challenge Geber C neben dem aktuellen Challenge Wert auch eine Liste mit den zuletzt erzeugten (historischen) Challenge-Werten vorhalten und in die Antwort an das Device D aufnehmen. Damit kann das Prüf-Gerät P auch Devices D erfolgreich validieren, die einige Challenge-Zyklen zurückgeblieben sind.

Alle Geräte/Devices, d.h. sowohl zu prüfende Devices D als auch Prüfgeräte P, sollen den Challenge-Geber C periodisch kontaktieren und so den jeweils aktuellen Challenge abfragen.

Alle Geräte, d.h. Devices D und Prüfgeräte P, erhalten von dem Challenge-Geber C den gleichen Challenge. Dies stellt kein Problem dar, weil
- die Signaturen sig ja durch den privaten Schlüssel PrK.Client alle unterschiedlich sind
- die Berechnung nur auf den Devices D mit Zugriff auf diesen privaten Schlüssel PrK.Client erfolgen kann
- eine Voraus-Berechnung der Antworten innerhalb der Gültigkeit eines Challenge-Wertes nicht möglich ist.

Der Challenge-Geber C ist eine vertrauenswürdige Komponente im System. Sowohl das zu prüfende als auch das prüfende Device/ Gerät D bzw. P vertrauen dem Dienst C bzw. den dadurch verteilten Challenge Werten.

### Das Device D

Das Device D ist in Besitz des End-Users (Client). Das Device D ist eine nicht vertrauenswürdige Komponente.

Es wird angenommen, dass das Device D einen Registrierungsprozess durchlaufen hat. Fig. 2 und 4 zeigen ein Device D, das den Registrierungsprozess bereits durchlaufen hat. In Rahmen dieses Prozesses hat das Device D einen Namen (Device-Name oder, gleichbedeutend, Name.Client) sowie einen privaten Schlüssel Prk.Client erhalten (PrK.Client). Der private Schlüssel PrK.Client soll in einem sicheren Speicher (Key-Store) auf dem Device D gespeichert werden. Der Key-Store muss sicherstellen, dass der private Schlüssel PrK.Client nicht ausgelesen und nicht auf ein anderes Gerät D übertragen werden kann.

Der Device-Name kann ungesichert auf dem Device D abgelegt werden. Der Device Name ist kein Geheimnis. Wird der Device-Name allerdings gelöscht oder überschrieben ist keine Validierung mehr mit diesem Device D möglich.

In der Registrierung des Devices D wird auch ein entsprechendes Zertifikat Cert.Client erzeugt. Dieses Zertifikat Cert.Client bindet den Device Namen zu dem öffentlichen Schlüssel PuK.Client, der zu dem im Key-Store abgelegten privaten Schlüssel PrK.Client passt. Das Zertifikat Cert.Client wird von der Autorität ausgegeben (d.h. signiert), die die Registrierung des Devices D durchführt.

Zusätzlich kann das Device D einen geschützten Datensatz haben. Dieser Datensatz ist nicht vertraulich, wohl aber muss seine Integrität geschützt werden. Dieser Datensatz ist das Gut (z.B. elektronischer Fahrschein), dessen Existenz in der Prüfung festgestellt werden soll und das nur zusammen mit dem gebundenen Device D gültig sein soll. Der Datensatz soll an das konkrete Device D gebunden sein. Dieser Datensatz ist eine signierte Datenstruktur, die von einer ausgebenden Stelle für dieses Device D erstellt und aufgespielt wurde. Eine weitere Bindung der Daten an das Gerät kann dadurch erreicht werden, dass der Geräte-Name in die Signatur eingeht. Dazu kann der Device-Name ein Bestandteil des Datensatzes selbst sein. Alternativ kann der Device-Name aber auch nur zur Berechnung der Signatur verwendet werden, ohne selbst in der Datenstruktur enthalten zu sein. Die Signatur wird mit einem privaten Schlüssel PrK.Data der ausgebenden Stelle (d.h. Herausgebers) berechnet.

Zur Prüfung erzeugt das Device D eine Antwort, die als wesentliches Element eine Signatur sig enthält, die aus dem Datensatz und dem Challenge mit dem auf dem Device D gespeicherten privaten Schlüssel PrK.Client gebildet wird. In weiteren Ausführungsformen können auch zusätzliche Komponenten in die Signaturberechnung einbezogen werden, die dem Prüfgerät P entweder implizit bekannt sind oder aber Bestandteil der Antwort sind. Die Antwort kann neben der Signatur sig noch weitere Datenelemente enthalten. In einer beispielhaften Ausprägung kann der Datensatz selbst übertragen werden, der nach der Validierung zur weiteren Verarbeitung dient.

### Das Prüfgerät P

Das Prüfgerät P ist eine vertrauenswürdige Komponente.

Das Prüfgerät P benötigt eine Vorrichtung (eine Schnittstelle) um die Antwort des zu prüfenden Devices D zu lesen. Das Verfahren erfordert nur einen uni-direktionalen Kommunikationskanal vom Device D zum Prüfgerät P. Es braucht keine Verbindung oder Sitzung aufgebaut werden. Insbesondere kann die Antwort des Devices D auch durch das optische Lesen eines Barcodes übertragen werden, der am Device D angezeigt wird. Darüber hinaus braucht das Device D nicht auf den Prüfvorgang zu reagieren. Das Verfahren eignet sich damit insbesondere für Prüfvorgänge, in denen eine Vielzahl von Devices D in kurzer Zeit validiert werden müssen.

Ferner benötigt das Prüfgerät P eine Einrichtung, um den aktuellen Challenge vom Challenge-Geber C zu empfangen. Das Verfahren ist unabhängig von der jeweiligen Methode, wie der Challenge-Geber C selektiert und wie der Challenge vom Challenge-Geber C abgefragt wird. Mindestens, aber nicht abschließend, sollen jedoch die folgenden Methoden vorgesehen sein, um diese Funktion zu realisieren:
- Das Prüfgerät P kann periodisch mit einem (oder mehreren) Challenge-Gebern C interagieren und den jeweils aktuellen Challenge abfragen.
- Das Prüfgerät P kann einen Challenge-Wert abfragen, wenn es in den geo-lokalen Bereich eintritt, der einem bestimmten Challenge-Geber C zugeordnet ist.
- Das Prüfgerät P kann einen Challenge-Wert abfragen, wenn es in den Funk-Bereich eines über ein Funknetz zugänglichen Challenge Geber C eintritt.
- Da sowohl das Prüfgerät P als auch der Challenge Geber C vertrauenswürdig sind, kann das Prüfgerät P ohne Interaktion mit dem Challenge-Geber C den aktuellen Challenge ermitteln, indem es das gleiche Verfahren zur Berechnung der Challenge Werte anwendet wie der Challenge-Geber C. Ein Beispiel hierzu ist eine fortgesetzte Ableitung von einem Schlüssel, der sowohl dem Challenge-Geber C als auch dem Prüfgerät P bekannt sind, oder eine Methode basierend auf einem Pseudo-Zufallszahlen-Generator, der mit einem gemeinsam bekannten Seed arbeitet.

In einer weiteren Variante kann das Prüfgerät P vom Challenge-Geber C neben dem aktuellen Challenge-Wert auch eine Liste der zuvor gültigen Challenge-Werte erhalten. Dies versetzt das Prüfgerät P in die Lage, auch Devices, die einige Zyklen zurückliegen, erfolgreich zu validieren.

Das Prüfgerät P wird, wie in Fig. 2 zu sehen ist, mit Zertifikaten Cert.Clients, Cert.Data, Cert.Server versorgt, um die Validierung der Antwort/Response des Devices D vornehmen zu können:
- **Cert.Clients:** Dieses Zertifikat mit dem enthaltenen öffentlichen Schlüssel PuK.Clients dient zur Verifikation der Device Zertifikate Cert.Client, die vorzugsweise vom Device D als Teil der Antwort übertragen werden. Die Übertragung als Teil der Antwort ist nur eine von mehreren möglichen Realisierungsvarianten, das Device Zertifikat Cert.Client kann auch über andere Wege an das Prüfgerät übertragen werden, z.B. über eine Online-Abfrage von einer Datenbank, die Zertifikate Cert.Client einer Vielzahl von registrierten Devices D enthält.
- **Cert.Data:** Der öffentliche Schlüssel (PuK.Data) dieses Zertifikats dient zur Validierung des Datensatzes. Der Datensatz wird vom Herausgeber mit seinem privaten Schlüssel PrK.Data signiert, wenn er auf das Device D übertragen und an das Device D gebunden wird.
- **Cert.Server:** Dies ist das Zertifikat des Challenge-Geber C Service. Das Prüfgerät P kann mit diesem Zertifikat eine Authentifizierung des Challenge-Gebers C durchführen. Damit kann das Prüfgerät P abwehren, dass durch einen fremden Dienst falsche Challenge-Werte injiziert werden und damit die Validierung der Devices D verhindert wird.

Die Zertifikate Cert.Clients, Cert.Data, Cert.Server werden vorab konfiguriert und im Prüfgerät P gespeichert.

### Die Verteilung des Challenge

Der Challenge wird durch den Challenge-Geber C sowohl an das Prüfgerät P als auch an das Device D verteilt.

Dazu stellt der Challenge Geber C einen Dienst bereit, über den die Devices D den aktuellen Challenge abfragen können. Die Verteilung der Challenges zum Prüfgerät P bzw. zum Device D kann auch auf unterschiedlichen Wegen geschehen.

Wenn das Device D einen Challenge erhalten hat, bildet es aus dem Challenge und dem gebundenen Datensatz eine Antwort/Response, und stellt diese Antwort/ Response zur Prüfung zur Verfügung. Die Berechnung der Antwort kann zu einem beliebigen Zeitpunkt, jedoch vor der Prüfung erfolgen. Das Prüfgerät P ermittelt den Challenge analog.

Im beispielhaften Fall der Device-gebundenen Fahrkarte könnte das Device D die Antwort/Response als Barcode darstellen, und am Display des Devices D darstellen.

### Die Prüfung

Fig. 3 und Fig. 4 zeigen einen Prüfvorgang, bei dem ein Benutzer mit einem Device D in einen ÖPNV-Kontrollbereich eintritt (Schritt 1.0), z.B. in ein ÖPNV-Fahrzeug oder in einen Zugangsbereich zu einem ÖPNV-Fahrzeug, und daraufhin ein im Device D enthaltener Datensatz, der einen Fahrschein für das ÖPNV-Fahrzeug darstellt, geprüft wird. Der Datensatz ist bereits in einer vorgefertigten Antwort/Response im Device D angelegt. Im später erfolgenden (Schritt 1.5) Prüfvorgang liest das Prüfgerät P die Antwort/Response, die auf dem Device D vorliegt, in der Nachricht N aus dem Device D aus. Da die Antwort/ Response beim Erhalt des Challenge berechnet wurde und bereits vorliegt, kann die Antwort/Response einfach über eine uni-direktionale Kommunikationsverbindung ausgelesen werden (Nachricht N).

Die Interaktion der beteiligten Komponenten Device D, Prüfgerät P und Challenge-Geber C beim Prüfvorgang ist in Fig. 3 dargestellt. Sowohl das Prüfgerät P als auch das Device D werden vor der eigentlichen Prüfung durch den Challenge-Geber C mit den aktuellen Challenge-Werten versorgt (Schritte 1.1 bis 1.4). Die Verteilung der Challenge-Werte kann mehrmals erfolgen (z.B. in einer periodischen Loop, d.h. Wiederholungsschleife), ohne dass zwingend ein Prüfvorgang nachfolgen muss.

Die Prüfung erfolgt durch eine einzige Nachricht N vom Device D an das Prüfgerät P (Schritt 1.5).

Die Nachricht N des Device D an das Prüfgerät P enthält zumindest folgende Komponenten: einen Device-Namen des sendenden Device D, optional ein Device-Zertifikat Cert.Client des sendenden Device D (alternativ kann das Prüfgerät, wie weiter oben dargelegt, das Device Zertifikat auch über andere Kommunikationswege erhalten, z.B. über eine online-Abfrage), einen Datensatz (Daten, "daten", z.B. die eigentlichen Fahrscheindaten), einen vom Challenge-Geber C bezogenen Challenge (oder alternativ eine Referenz, die es dem Prüfgerät erlaubt, den aktuell verwendeten Challenge zu ermitteln) und eine mit dem privaten Schlüssel PrK.Client des sendenden Device gebildete Signatur sig, und vorzugsweise zudem einen Hashwert Hash über den Datensatz.

Die Authentifizierung durch das Prüfgerät P erfordert die Prüfung des Challenge (1.8), die Validierung des Zertifikats Cert.Client (1.6) und letztlich die Prüfung der Signatur sig (1.10).

Im Detail erfolgt der Prüfvorgang in mehreren Schritten wie in Fig. 4 anhand eines Prüfgeräts P dargestellt ist:
1. (= Fig. 3 Schritt 1.6): Prüfung Device Zertifikat Cert.Client: Das Prüfgerät P verifiziert das Zertifikat Cert.Client, das Bestandteil der Nachricht N sein kann. In einer weiteren Ausführungsform kann das Prüfgerät P das Device Zertifikat auch über andere Wege erhalten (z.B. im Zuge einer online-Abfrage). Dazu verwendet das Prüfgerät P den öffentlichen Schlüssel PuK.Client aus dem Zwischenzertifikat für alle Device Zertifikate Cert.Clients.
2. (= Fig. 3 Schritt 1.7): Prüfung der Antwort: Als nächstes wird die Signatur sig der Antwort/Response mit dem öffentlichen Schlüssel PuK.Client aus dem Device Zertifikat Cert.Client geprüft. Das Device Zertifikat gilt als vertrauenswürdig, da es im vorigen Schritt bereits geprüft wurde.
3. (= Fig. 3 Schritt 1.8): Prüfung des Challenge: Das Prüfgerät P vergleicht den Challenge-Wert aus der Nachricht N mit dem erwarteten Challenge Wert, wie er vom Challenge Geber C verteilt wurde. Das Prüfgerät P kann auch historische Challenge Werte akzeptieren, z.B. anhand einer Liste akzeptabler Challenges, um die Prüfung von Devices D zu ermöglichen, die nicht mit dem aktuellen Challenge-Wert antworten. Die Nachricht kann auch eine Referenz auf den Challenge enthalten, aus der das Prüfgerät P den verwendeten Challenge Wert ermitteln kann.
4. (= Fig. 3 Schritt 1.9): Prüfung Hash (falls die Nachricht N einen Hashwert Hash über den Datensatz enthält): Das Prüfgerät P berechnet den Hash des geschützten Datensatzes und vergleicht mit dem Hash-Wert aus der Antwort/Nachricht N. Dadurch wird geprüft, ob die Antwort und der geschützte Datensatz zusammen gehören.
5. (= Fig. 3 Schritt 1.10): Prüfung Datensatz: Das Prüfgerät P verifiziert die Signatur sig des geschützten Datensatzes mit dem öffentlichen Schlüssel PuK.Data aus dem Daten Zertifikat Cert.Data.
6. (= Fig. 3 Schritt 1.11): Prüfung Device Name: Letztlich vergleicht das Prüfgerät P den Device Namen ("subject" aus dem Device Zertifikat Cert.Client) mit dem Device Namen, der im geschützten Datensatz enthalten ist.

## Patentansprüche

1. Verfahren zur Verifizierung eines in einem zu prüfenden Device (D) gespeicherten Datensatzes durch ein Prüfgerät (P) mittels eines Challenge-Response-Verfahrens, bei dem:
- das Device (D) einen Challenge von einem Challenge-Geber (C) empfängt oder abgestimmt mit dem Challenge-Geber (C) selbst berechnet,
- das Device (D) unter Verwendung des Challenge eine Response-Antwort bildet und die gebildete Response-Antwort und den Challenge an das Prüfgerät (P) sendet,
- das Prüfgerät (P) die gesendete Response-Antwort auswertet und damit den Datensatz verifiziert, indem das Prüfgerät (P) aus dem Datensatz einen Hash-Wert berechnet und mit einem in der Response-Antwort enthaltenen Hash-Wert vergleicht, sowie den Challenge verifiziert,
wobei:
- der Challenge-Geber (C) als ein von dem Prüfgerät (P) unterschiedlicher externer Challenge-Geber (C) gestaltet ist,
- auch das Prüfgerät (P) den Challenge von einem Challenge-Geber (C) empfängt oder abgestimmt mit dem Challenge-Geber (C) selbst berechnet, und
- das Prüfgerät (P) mittels des vom Challenge-Geber (C) empfangenen bzw. abgestimmt mit dem Challenge-Geber (C) berechneten Challenge den vom Device (D) empfangenen Challenge verifiziert,
wobei der Datensatz die Funktion eines elektronischen Fahrscheins für Verkehrsmittel eines Verkehrssystems hat, und wobei der Challenge-Geber (C) eine oder mehrere Challenge-Geber-Instanzen umfasst, die in ein oder mehreren oder allen Verkehrsmitteln, oder/und an Zugängen dieser Verkehrsmittel, oder/und in Zugangsbereichen zum Verkehrssystems vorgesehen sind.

2. Verfahren nach Anspruch 1, wobei, um die Response-Antwort und den Challenge zwischen dem Device (D) und dem Prüfgerät (P) zu übertragen, zwischen dem Device (D) und dem Prüfgerät (P) nur eine einzige Nachricht (N) übertragen wird, und keine weiteren Nachrichten zwischen Device (D) und dem Prüfgerät (P) übertragen werden.

3. Verfahren nach Anspruch 1 oder 2, wobei der Challenge-Geber (C) in vorbestimmten Zeitabständen jeweils einen neuen Challenge erzeugt und zur Übertragung an das Device (D) und das Prüfgerät (P) bereitstellt.

4. Verfahren nach Anspruch 3, wobei der bereitgestellte Challenge ohne Aufforderung seitens des Device (D) bzw. des Prüfgeräts (P) durch den Challenge-Geber (C) an das Device (D) und das Prüfgerät (P) übertragen wird.

5. Verfahren nach Anspruch 3, wobei der bereitgestellte Challenge anlässlich einer seitens des Device (D) bzw. des Prüfgeräts (P) an den Challenge-Geber (C) gesendeten Aufforderung durch den Challenge-Geber (C) an das Device (D) und das Prüfgerät (P) übertragen wird (Request/Response-Verfahren).

6. Verfahren nach Anspruch 5, wobei das Senden der Aufforderung durch einen Trigger veranlasst wird.

7. Verfahren nach Anspruch 6, wobei als Trigger einer der folgenden vorgesehen ist:
- eine Zustandsänderung auf dem Device (D) bzw. Prüfgerät (P) zwischen einem ersten Zustand und einem zweiten, Zustand des Device (D) bzw. Prüfgeräts (P);
- ein Ereignis basierend auf Zeit,
- ein Ereignis basierend auf Zeit, das als ein Ereignis des Empfangs eines beim Device (D) bzw. Prüfgerät (P) periodisch eingehenden Signals gestaltet ist;
- ein Hardware Signal;
- ein Hardware Signal, das als eine Unterbrechung (Interrupt), innerhalb des Device (D) bzw. Prüfgeräts (P) gestaltet ist;
- ein programmgesteuertes oder durch Software generiertes Ereignis;
- ein räumliches Einbringen des Device (D) bzw. des Prüfgeräts (P) in einen räumlichen Einflussbereich des Challenge-Gebers (C).

8. Verfahren nach Anspruch 1 und 6, wobei als Trigger vorgesehen ist: ein räumliches Einbringen des Device (D) bzw. des Prüfgeräts (P) in einen räumlichen Einflussbereich des Challenge-Gebers (C); oder ein räumliches Einbringen des Device (D) bzw. des Prüfgeräts (P) in einen räumlichen Einflussbereich des Challenge-Gebers (C), das als ein Einbringen in einen Innenraum eines Verkehrsmittels gestaltet ist; oder ein Passieren eines Zugangs in ein Verkehrsmittel; oder ein Passieren eines Zugangsbereichs zum Verkehrssystem.

9. Verfahren nach einem der Ansprüche 1 bis 8, wobei als Challenge eine vom Challenge-Geber (C) erzeugte Zufallsinformation vorgesehen ist.

10. Verfahren nach einem der Ansprüche 1 bis 9, wobei die Response-Antwort, bzw. die Nachricht (N) gemäß Anspruch 2, zumindest den Datensatz enthält.

11. Verfahren nach Anspruch 10, wobei die Response-Antwort, bzw. die Nachricht (N) gemäß Anspruch 2, zusätzlich eine oder mehrere der folgenden enthält: ein Device-Zertifikat (Cert.Client) des Device (D), einen Device-Namen (Device.Name) des sendenden Device (D), den vom Challenge-Geber (C) bezogenen Challenge, eine mit einem privaten Schlüssel (PrK.Client) des Device (D) gebildete Signatur (sig), einen Hashwert (Hash) über den Datensatz.

12. Verfahren nach Anspruch 11, wobei das Device-Zertifikat (Cert.Client) des Device (D), nicht in der Response-Antwort bzw. Nachricht (N) enthalten ist sondern über einen anderen Weg an das Prüfgerät übermittelt wird, und zwar über eine Abfrage aus einer Datenbank, die Zertifikate (Cert.Client) einer Vielzahl von registrierten Devices (D) enthält.

13. Verfahren nach einem der Ansprüche 10 bis 12, wobei die Nachricht N anstelle des Challenge selbst eine Referenz auf den verwendeten Challenge-Wert beinhaltet, aus dem das Prüfgerät P eben diesen Challenge Wert eindeutig ermitteln kann.

14. Verfahren nach einem der Ansprüche 1 bis 13, wobei das Senden und Übertragen zwischen Challenge-Geber (C), Device (D) und Prüfgerät (G) jeweils über eine Funkverbindung durchgeführt wird, die als eine Mobilfunkverbindung oder eine kurz- oder mittelreichweitige Funkverbindung wie NFC, BLE, Infrarot oder WLAN gestaltet ist.

15. Verfahren nach einem der Ansprüche 1 bis 14, wobei die vom Device (D) an das Prüfgerät (P) gesendete Response-Antwort eine unter Verwendung des Datensatzes und eines für das Device (D) individuellen privaten Schlüssels (Prk.Client) gebildete Signatur (sig) umfasst oder durch eine solche Signatur (sig) gebildet ist, und wobei das Device über den privaten Schlüssel (Prk.Client) verfügt und das Prüfgerät (P) über den entsprechenden öffentlichen Schlüssel (PuK.Client) verfügt, mit dem sich die Signatur (sig) verifizieren lässt.

## Claims

1. A method for verifying a data set, stored in a device (D) to be tested, by a testing device (P) by means of a challenge-response method, in which:
- the device (D) receives a challenge from a challenge provider (C) or calculates this itself in coordination with the challenge provider (C),
- the device (D) forms a response reply using the challenge and sends the formed response reply and the challenge to the testing device (P),
- the testing device (P) evaluates the sent response reply and thus verifies the data set by the testing device (P) calculating a hash value from the data set and comparing it with a hash value contained in the response reply, and verifies the challenge,
wherein:
- the challenge provider (C) is designed as an external challenge provider (C) different from the testing device (P),
- the testing device (P) also receives the challenge from a challenge provider (C) or calculates this itself in coordination with the challenge provider (C), and
- the testing device (P) verifies the challenge received from the device (D) by means of the challenge received from the challenge provider (C) or calculated in coordination with the challenge provider (C),
wherein the data set has the function of an electronic ticket for means of transport of a transport system, and wherein the challenge provider (C) comprises one or more challenge provider instances which are provided in one or more or all means of transport, or/and at entrances of these means of transport, or/and in access areas to the transport system.

2. The method according to claim 1, wherein in order to transfer the response reply and the challenge between the device (D) and the testing device (P), only a single message (N) is transferred between the device (D) and the testing device (P), and no further messages are transferred between the device (D) and the testing device (P).

3. The method according to claim 1 or 2, wherein the challenge provider (C) respectively generates a new challenge at predetermined time intervals and provides it for transfer to the device (D) and the testing device (P).

4. The method according to claim 3, wherein the supplied challenge is transferred to the device (D) and the testing device (P) by the challenge provider (C) without a request from the device (D) or the testing device (P).

5. The method according to claim 3, wherein the supplied challenge is transferred to the device (D) and the testing device (P) by the challenge provider (C) on the occasion of a request sent to the challenge provider (C) by the device (D) or the testing device (P) (request/response method).

6. The method according to claim 5, wherein the sending of the request is initiated by a trigger.

7. The method according to claim 6, wherein as a trigger one of the following is provided:
- a change of state on the device (D) or the testing device (P) between a first state and a second state of the device (D) or the testing device (P);
- an event based on time,
- an event based on time, which is designed as an event of receiving a signal received periodically at the device (D) or the testing device (P);
- a hardware signal;
- a hardware signal which is designed as an interruption (Interrupt) within the device (D) or the testing device (P);
- a program-controlled or software-generated event;
- a spatial introduction of the device (D) or the testing device (P) into a spatial area of influence of the challenge provider (C).

8. The method according to claims 1 and 6, wherein there is provided as a trigger: a spatial introduction of the device (D) or of the testing device (P) into a spatial area of influence of the challenge provider (C); or a spatial introduction of the device (D) or of the testing device (P) into a spatial area of influence of the challenge provider (C), which is designed as an introduction into an interior of a means of transport; or a passing of an access to a means of transport; or a passing of an access area to the transport system.

9. The method according to any of claims 1 to 8, wherein a random information item generated by the challenge provider (C) is provided as a challenge.

10. The method according to any of claims 1 to 9, wherein the response reply or the message (N) according to claim 2 contains at least the data set.

11. The method according to claim 10, wherein the response reply or the message (N) according to claim 2 additionally contains one or more of the following: a device certificate (Cert.Client) of the device (D), a device name (Device.Name) of the sending device (D), the challenge obtained from the challenge provider (C), a signature (sig) formed with a private key (PrK.Client) of the device (D), a hash value (Hash) on the data set.

12. The method according to claim 11, wherein the device certificate (Cert.Client) of the device (D) is not contained in the response reply or message (N) but is conveyed to the testing device via a different way, namely via a query from a database which contains certificates (Cert.Client) of a plurality of registered devices (D).

13. The method according to any of claims 10 to 12, wherein the message N contains, instead of the challenge itself, a reference to the used challenge value, from which the testing device P can unambiguously determine precisely this challenge value.

14. The method according to any of claims 1 to 13, wherein the sending and transfering between challenge provider (C), device (D) and testing device (G) in each case is carried out via a radio connection which is designed as a mobile radio connection or a short- or medium-range radio_connection, such as NFC, BLE, infrared or wireless LAN.

15. The method according to any of claims 1 to 14, wherein the response reply sent from the device (D) to the testing device (P) comprises a signature (sig) formed using the data set and a private key (Prk.Client) individual to the device (D) or is formed by such a signature (sig), and wherein the device has the private key (Prk.Client) and the testing device (P) has the corresponding public key (PuK.Client) with which the signature (sig) can be verified.

## Revendications

1. Procédé de vérification d'un jeu de données, mémorisé dans un dispositif (D) à examiner, par un appareil d'examen (P) au moyen d'un procédé challenge-response, dans lequel :
- le dispositif (D) reçoit de la part d'un émetteur de challenge (C) un challenge ou le calcule lui-même en concertation avec l'émetteur de challenge (C),
- le dispositif (D) constitue une réponse de response en utilisant le challenge et envoie la réponse de response constituée et le challenge à l'appareil d'examen (P),
- l'appareil d'examen (P) évalue la réponse de response envoyée et vérifie avec cela le jeu de données, ce qui a lieu en ce que l'appareil d'examen (P) calcule à partir du jeu de données une valeur de hachage et la compare avec une valeur de hachage contenue dans la réponse de response, ainsi que vérifie le challenge,
cependant que :
- l'émetteur de challenge (C) est réalisé comme un émetteur de challenge (C) externe différent de l'appareil d'examen (P),
- aussi l'appareil d'examen (P) reçoit le challenge de la part d'un émetteur de challenge (C) ou le calcule lui-même en concertation avec l'émetteur de challenge (C), et
- l'appareil d'examen (P), au moyen du challenge reçu de la part de l'émetteur de challenge (C) ou calculé en concertation avec l'émetteur de challenge (C), vérifie le challenge reçu par le dispositif (D),
cependant que le jeu de données a la fonction d'un billet électronique de transport pour des moyens de transport d'un système de transport, et cependant que l'émetteur de challenge (C) comprend une ou plusieurs instances d'émetteur de challenge qui son prévues dans un ou plusieurs ou tous les moyens de transport, ou/et à des accès de ces moyens de transport, ou/et dans des zones d'accès au système de transport.

2. Procédé selon la revendication 1, cependant que, afin de transmettre la réponse de response et le challenge entre le dispositif (D) et l'appareil d'examen (P), seulement un seul message (N) est transmis entre le dispositif (D) et l'appareil d'examen (P), et aucuns autres messages ne sont transmis entre le dispositif (D) et l'appareil d'examen (P).

3. Procédé selon la revendication 1 ou 2, cependant que l'émetteur de challenge (C), à des intervalles de temps prédéterminés, produit respectivement un nouveau challenge et le met à disposition pour la transmission au dispositif (D) et à l'appareil d'examen (P).

4. Procédé selon la revendication 3, cependant que le challenge mis à disposition est, sans sollicitation de la part du dispositif (D) ou de l'appareil d'examen (P), transmis par l'émetteur de challenge (C) au dispositif (D) et à l'appareil d'examen (P).

5. Procédé selon la revendication 3, cependant que le challenge mis à disposition est, à l'occasion d'une sollicitation envoyée de la part du dispositif (D) ou de l'appareil d'examen (P) à l'émetteur de challenge (C), transmis (procédé challenge/response) par l'émetteur de challenge (C) au dispositif (D) et à l'appareil d'examen (P).

6. Procédé selon la revendication 5, cependant que l'envoi de la sollicitation est occasionné par un déclencheur.

7. Procédé selon la revendication 6, cependant que, comme déclencheur, un des suivants est prévu :
- une modification d'état sur le dispositif (D) ou l'appareil d'examen (P) entre un premier état et un deuxième état du dispositif (D) ou de l'appareil d'examen (P) ;
- un événement basé sur le temps,
- un événement basé sur le temps qui est réalisé en tant qu'un événement de la réception d'un signal parvenant périodiquement au dispositif (D) ou à l'appareil d'examen (P) ;
- un signal matériel ;
- un signal matériel qui est réalisé en tant qu'une interruption (Interrupt) à l'intérieur du dispositif (D) ou de l'appareil d'examen (P) ;
- un événement commandé par programme ou généré par logiciel ;
- une introduction spatiale du dispositif (D) ou de l'appareil d'examen (P) dans une zone spatiale d'influence de l'émetteur de challenge (C).

8. Procédé selon la revendication 1 et 6, cependant que, comme déclencheur, il est prévu : une introduction spatiale du dispositif (D) ou de l'appareil d'examen (P) dans une zone spatiale d'influence de l'émetteur de challenge (C) ; ou une introduction spatiale du dispositif (D) ou de l'appareil d'examen (P) dans une zone spatiale d'influence de l'émetteur de challenge (C) qui est réalisée sous forme d'introduction dans un espace interne d'un moyen de transport ; ou un franchissement d'un accès dans un moyen de transport ; ou un franchissement d'une zone d'accès au système de transport.

9. Procédé selon une des revendications de 1 à 8, cependant que, comme challenge, une information aléatoire produite par l'émetteur de challenge (C) est prévue.

10. Procédé selon une des revendications de 1 à 9, cependant que la réponse de response, ou le message (N) selon la revendication 2, contient au moins le jeu de données.

11. Procédé selon la revendication 10, cependant que la réponse de response, ou le message (N) selon la revendication 2, contient en outre un ou plusieurs des suivants : un certificat de dispositif (Cert.Client) du dispositif (D), un nom de dispositif (Device.Name) du dispositif (D) envoyant, le challenge fourni par l'émetteur de challenge (C), une signature (sig) constituée avec une clé privée (PrK.Client) du dispositif (D), une valeur de hachage (Hash) se rapportant au jeu de données.

12. Procédé selon la revendication 11, cependant que le certificat de dispositif (Cert.Client) du dispositif (D) n'est pas contenu dans la réponse de response ou message (N), mais est transférée par un autre chemin à l'appareil d'examen, à savoir par l'intermédiaire d'une interrogation provenant d'une banque de données qui contient des certificats (Cert.Client) d'une pluralité de dispositifs (D) enregistrés.

13. Procédé selon une des revendications de 10 à 12, cependant que le message N comporte, au lieu du challenge lui-même, une référence à la valeur de challenge utilisée, à partir de laquelle l'appareil d'examen P peut justement déterminer univoquement cette valeur de challenge.

14. Procédé selon une des revendications de 1 à 13, cependant que l'envoi et la transmission entre émetteur de challenge (C), dispositif (D) et appareil d'examen (G) est respectivement effectué(e) par l'intermédiaire d'une liaison radio qui est réalisée en tant qu'une liaison radio mobile ou une liaison radio de courte ou moyenne portée telle que NFC, BLE, infrarouge ou Wi-Fi.

15. Procédé selon une des revendications de 1 à 14, cependant que la réponse de response envoyée du dispositif (D) à l'appareil d'examen (P) comprend une signature (sig) constituée en utilisant le jeu de données et une clé privée (PrK.Client) individuelle au dispositif (D) ou est constituée par une telle signature (sig), et cependant que le dispositif dispose de la clé privée (PrK.Client) et l'appareil d'examen (P) dispose de la clé publique (PuK.Client) correspondante avec laquelle la signature (sig) peut être vérifiée.
